# EUROPEAN PATENT APPLICATION

(11) **EP 2 086 214 A1**
(43) Date of publication of application: **05.08.2009**
(21) Application number: 09151624.5
(22) Date of filing: 29.01.2009
(51) Int. Cl.: H04N 1/32

(54) **Method and apparatus for forming image**

(30) Priority: 30.01.2008 JP 2008019168; 04.12.2008 JP 2008309861
(71) Applicant: Ricoh Company, Ltd., Tokyo 143-8555 (JP)
(72) Inventor: Kumagai, Masateru, Ohta-Ku Tokyo 143-8555 (JP); Igarashi, Yasuyuki, Ohta-ku Tokyo 143-8555 (JP); Uruta, Hiroya, Ohta-ku Tokyo 143-8555 (JP); Iura, Saori, Ohta-ku Tokyo 143-8555 (JP); Okada, Daisuke, Ohta-Ku Tokyo 143-8555 (JP)
(74) Representative: Schwabe - Sandmair - Marx

(57) **Abstract**

In an image forming apparatus, a setting management unit (106) acquires at least one of first setting data and second setting data. The first setting data is information that specifies data to be included in the identification image from among the identification data and the second setting data is information that specifies a position of the identification image. An output control unit (108) outputs (e.g., prints) output data including the identification image that is created based on at least one of the first setting data and the second setting data that is acquired by the setting management unit.

## Description

### CROSS-REFERENCE TO RELATED APPLICATIONS

The present application claims priority to and incorporates by reference the entire contents of Japanese priority document 2008-19168 filed in Japan on January 30, 2008 and Japanese priority document 2008-309861 filed in Japan on December 4, 2008.

### BACKGROUND OF THE INVENTION

### 1. Field of the Invention

The present invention relates to a technology for forming images.

### 2. Description of the Related Art

Copiers, facsimile machines, and multifunctional products (MFPs) have been widely known as apparatuses for processing image data. Most of those image processing apparatuses are connected via a network to a plurality of external devices such as personal computers (PCs) that create image data. Upon receiving image data from one or more of the PCs, the image processing apparatuses print the received image data on a printing sheet. Most of the conventional image processing apparatuses, however, print out the received image data in no consideration about the sender PC. This brings about problems such as mixing of copies from different senders and difficulty in identifying a user who requests the outputting of the copy remained on a tray.

To solve this problem, a conventional image forming apparatus that is disclosed in Japanese Patent Application Laid-open No. 2003-335032 prints out a page on which a banner is printed. The banner includes information for identifying the sender (hereinafter, "sender information") such as user ID, date/time of printing, etc. Therefore, anyone who sees the banner can easily identify the user who requests the outputting of the copy. More particularly, the conventional image forming apparatus receives a print job from the sender PC, stores therein the sender information extracted from the print job, creates the banner from the sender information, creates print data by combining the image data with the banner, and outputs the print data onto a printing medium such as a paper sheet. Thus, anyone who sees the banner on the copy can easily identify the user who requests printing of the printing job.

Some users wish to output the sender information as the banner in a customized manner. However, because the conventional image forming apparatus cannot change types of the sender information to be combined with the image data as the banner, the user cannot create the customized banner. In other words, there is no chance of creating a banner more advantageous in identifying the user who requests printing of the printing job. More particularly, in the conventional image forming apparatus, the user cannot specify a position on which the banner is to be printed and a font size of characters used in the banner. All banners are output in a fixed format.

### SUMMARY OF THE INVENTION

It is an object of the present invention to at least partially solve the problems in the conventional technology.

According to an aspect of the present invention, there is provided an image forming apparatus that outputs output data including a main image that is created from image data and an identification image that is created from identification data included in the image data. The image forming apparatus includes a setting management unit that acquires at least one of first setting data and second setting data, the first setting data being information that specifies data to be included in the identification image from among the identification data, the second setting data being information that specifies a position of the identification image; and an output control unit that outputs the output data including the identification image that is created based on at least one of the first setting data and the second setting data that is acquired by the setting management unit.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a schematic diagram of a network structure including an MFP according to a first embodiment of the present invention;
Fig. 2 is a block diagram of the MFP illustrated in Fig. 1;
Fig. 3 is a schematic diagram of a setting screen appearing on an operation unit illustrated in Fig. 2;
Fig. 4 is a component diagram of an output control unit and a system control unit illustrated in Fig. 2;
Fig. 5 is an example of an output image;
Fig. 6 is a sequence diagram of an output process in which the MFP according to the first embodiment prints print data;
Fig. 7 is a block diagram of an MFP according to a second embodiment of the present invention; and
Fig. 8 is a sequence diagram of an output process in which the MFP according to the second embodiment prints the print data.

### DETAILED DESCRIPTION OF THE PREFERRED EMBODIMENTS

Exemplary embodiments of the present invention are described in detail below with reference to the accompanying drawings. In the following embodiments, an MFP is used as an image forming apparatus. However, any devices such as copiers, printers, facsimile machines and PCs that can output image data can be used instead of the MFP.

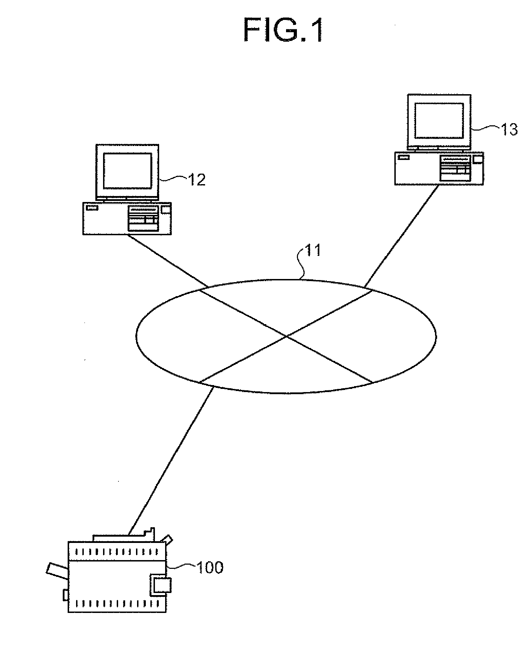

Fig. 1 is a schematic diagram of a network structure including an MFP 100 according to a first embodiment of the present invention. The MFP 100 is connected to PCs 12 and 13 via a network 11 such as a local area network (LAN) and the Internet. The number of MFPs or the number of PCs connectable to the network 11 is not limited to those illustrated in Fig. 1.

The PCs 12 and 13 are general PCs. Upon printing image data or a document, the PC 12 (or 13) sends a print request to the MFP 100 via the network 11.

The MFP 100 has various functions, for example, receiving image data via the network 11, processing the image data, storing therein the image data, and sending the image data to another external device. The MFP 100 performs appropriate functions in response to the print request received from the PCs 12 and 13. More particularly, upon receiving a print request to print target image data, the MFP 100 creates print data including banner data and image data and prints the print data on a printing medium such as a paper sheet. The banner data is created from identification data included in the target image data and the image data is created from the target image data. The identification data is unique information for identifying the target image data. Assume, for example, the print request is received from the PC 12. Then, the identification data includes, for example, date/time of printing indicative when the MFP 100 receives the print request from the PC 12, user name of a user who is using the PC 12, machine name of the device that is to print the image data, i.e., the MFP 100, text such as a comment, and page number.

Although an outputting method of printing the print data on the printing medium is considered in the first embodiment, any other outputting manner is permissible. For example, it is allowable, instead of printing out the print data, to store the print data in a storage unit (not shown), send the print data to an external device, or send the print data to a facsimile device.

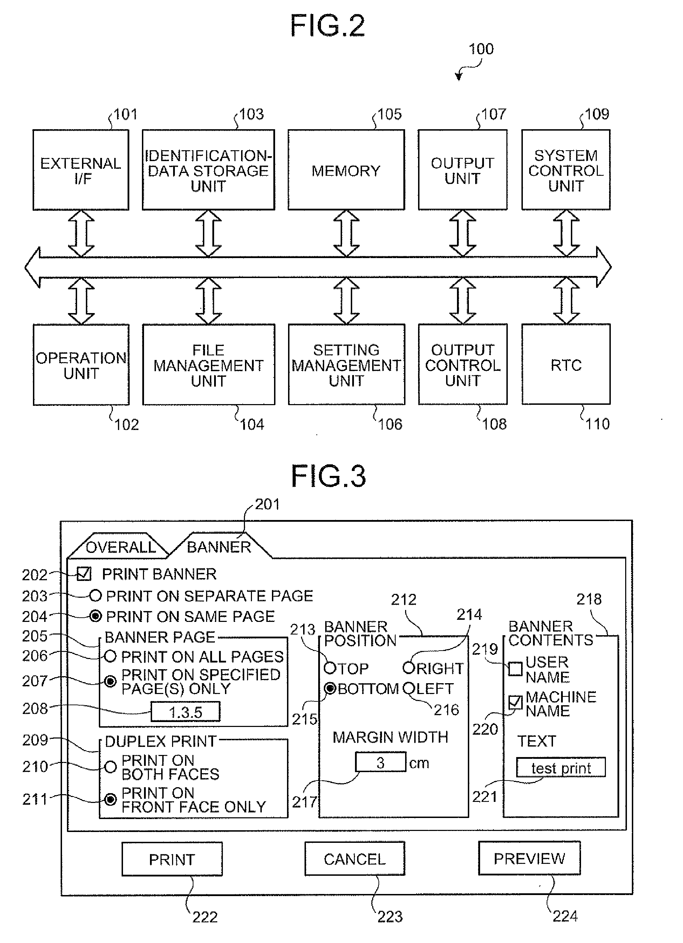

Fig. 2 is a block diagram of the MFP 100. The MFP 100 includes an external interface (I/F) 101, an operation unit 102, an identification-data storage unit 103, a file management unit 104, a memory 105, a setting management unit 106, an output unit 107, an output control unit 108, a system control unit 109, and a real time clock (RTC) 110. The MFP 100 is connected to the network 11 via the external I/F 101. Upon receiving the target image data from the PC 12 via the external I/F 101, the MFP 100 processes the received target image data and prints out the processed target image data on the printing sheet.

The external I/F 101, which is connected to the network 11, sends/receives various data such as control data and the image data that includes the identification data to/from the external PCs 12 and 13. The PCs 12 and 13 are connected to the network 11 based on a certain communication protocol.

The identification-data storage unit 103 stores therein the identification data extracted from the target image data that is received by the external I/F 101. The identification-data storage unit 103 can be, for example, a random access memory (RAM) (not shown).

The RTC 110 has various functions such as a clock and a calendar.

The memory 105 is used for loading the target image data that is received by the external I/F 101 and storing therein the image data. The memory 105 can be, for example, a RAM (not shown).

The operation unit 102 senses, under control of the system control unit 109, various inputs made by a user about settings via a touch panel (not shown). The operation unit 102 displays a preview screen and various setting screens on the touch panel.

The system control unit 109 controls the MFP 100. The system control unit 109 can be formed with, for example, a central processing unit (CPU) (not shown), a read only memory (ROM) (now shown), and a RAM (not shown). To implement various processes, the CPU reads computer programs from the ROM, and executes the computer programs by using a work area of the RAM.

The computer program executed by the MFP 100 can be stored, in a form of a computer file that is installable and executable on a computer, in a recording medium readable by the computer, such as a compact disk-read only memory (CD-ROM), a flexible disk (FD), a compact disk-recordable (CD-R), and a digital versatile disk (DVD). When the CPU of the system control unit 109 reads the computer program from the recording medium and loads the read computer program on a main storage device (not shown) , various functions of the MFP 100 are implemented. On the other hand, the computer program can be stored in another computer connected to the MFP 100 via the network 11 or some other network, and downloaded to the MFP 100. The computer program can be delivered or distributed via a network such as the Internet.

The system control unit 109 controls the operation unit 102. The system control unit 109 receives at least one of banner-contents setting data and banner-position setting data input by the user in a setting screen appearing on the touch panel of the operation unit 102. The banner-contents setting data is used for selecting data to be included in a banner (hereinafter, "banner-contents data") from among the identification data that is extracted from the image data. The banner-position setting data is used for specifying a position of the banner (e.g., position in a combine-print mode, same page on which the image data is formed, front and/or back face of the recording medium, separate page different from pages on which the image data is formed, position of a margin with respect to the main image).

Fig. 3 is a schematic diagram of the setting screen appearing on the operation unit 102 for receiving the banner-contents setting data and the banner-position setting data according to the first embodiment. When the user selects a [BANNER] tab 201 in this setting screen, the system control unit 109 displays the setting screen for receiving the banner-contents setting data and the banner-position setting data on the operation unit 102. Items on the setting screen are described in detail below.

Although a case of receiving the banner-contents setting data and the banner-position setting data via the setting screen appearing on the operation unit 102 is considered in the first embodiment, it is allowable to receive the banner-contents setting data and the banner-position setting data in some other manner. For example, the setting screen shown in Fig. 3 can be displayed on a display unit (not shown) of the PC 12 by using a printer drive installed in the PC 12. It is possible to receive at least one of the banner-contents setting data and the banner-position setting data via the setting screen from any of the PCs 12, 13. In this case, the system control unit 109 receives at least one of the banner-contents setting data and the banner-position setting data from the sender PC along with the target image data.

An item for switching between ON/OFF of the banner print is described below. A [PRINT BANNER] box 202 is a check box indicative of ON/OFF of the banner print, i.e., whether or not to print the banner. If the user checks the [PRINT BANNER] box 202 ON, the banner is printed.

Items for receiving the banner-contents setting data are described below. A [BANNER CONTENTS] group 218 is a group of check boxes and a dialog box for receiving the banner-contents setting data. A [USER NAME] box 219 is a check box indicative of whether the user name is to be included in the banner. A [MACHINE NAME] box 220 is a check box indicative of whether the machine name is to be included in the banner. A [TEXT] box 221 is a dialog box in which the user inputs a desired text to be included in the banner (e.g., "test print").

The system control unit 109 receives the banner-contents setting data via the [USER NAME] box 219, the [MACHINE NAME] box 220, and the [TEXT] box 221. Although three items, i.e., the user name, the machine name, and the text, are considered as the banner-contents setting data in the first embodiment, other items such as document name, date/time of printing, host name, and page data can be included in the banner-contents setting data.

Items for receiving the banner-position setting data are described below. A [PRINT ON SEPARATE PAGE] button 203 and a [PRINT ON SAME PAGE] button 204 are radio buttons. If the [PRINT ON SEPARATE PAGE] button 203 is selected, the banner is printed on a separate page, i.e., a page different from the page on which the image data is printed. If the [PRINT ON SAME PAGE] button 204 is selected, the banner is printed on the same page overlapped with the image data.

A [BANNER PAGE] group 205 includes radio buttons for receiving data about a page(s) on which the banner is to be printed as the banner-position setting data. If the [PRINT ON SAME PAGE] button 204 is selected, the user can set the radio buttons in the [BANNER PAGE] group 205. If a [PRINT ON ALL PAGES] button 206 is selected, the banner is printed on all pages. If a [PRINT ON SPECIFIED PAGE(S) ONLY] button 207 is selected, the banner is printed on specified page(s) only. In this case, the user inputs the numbers of the pages on which the banner is to be printed into a dialog box 208.

A [DUPLEX PRINT] group 209 includes radio buttons for receiving data about a face of the recording medium on which the banner is to be printed as the banner-position setting data. If the [PRINT ON SAME PAGE] button 204 is selected and if the output unit 107 is in a duplex-print mode, i.e., the image data is to be printed on both sides of the recording medium, the user can set the radio buttons in the [DUPLEX PRINT] group 209. If a [PRINT ON BOTH FACES] button 210 is selected, the banner is printed on both faces of the recording medium. If a [PRINT ON FRONT FACE ONLY] button 211 is selected, the banner is printed on only the front face of the recording medium. The setting screen can be configured to include additional buttons based on the functions of the MFP 100. For example, if the MFP 100 has a combine-print function in which a plurality of pages are combined into one page, it is possible to add a radio button for receiving the banner position with respect to a combined image that is created from the combined image data as the banner-position setting data for specifying.

A [BANNER POSITION] group 212 includes radio buttons for receiving a position of a margin with respect to the main image and a dialog box for receiving a width of the margin as the banner-position setting data. If the [PRINT ON SAME PAGE] button 204 is selected, the user can set the radio buttons and the dialog box in the [BANNER POSITION] group 212. If a [TOP] button 213 is selected, the banner is printed within the margin on the top side. If a [RIGHT] button 214 is selected, the banner is printed within the margin on the right side. If a [BOTTOM] button 215 is selected, the banner is printed within the margin on the bottom side. If a [LEFT] button 216 is selected, the banner is printed within the margin on the bottom side. A [MARGIN WIDTH] box 217 is the dialog box. The user can set width of the margin by inputting a desired value into the [MARGIN WIDTH] box 217.

The system control unit 109 receives the banner-position setting data via the radio buttons/dialog boxes 203 to 217. Although the radio buttons and the dialog boxes for specifying the banner page, the duplex print, and the banner position are described in the first embodiment as the items for receiving the banner-position setting data, other items can be included such as an item for specifying a font size and an item for specifying an orientation of the text within the banner.

If a [PRINT] button 222 shown in Fig. 3 is selected, the banner is printed out. If a [CANCEL] button 223 is selected, the printing of the banner is canceled. If a [PREVIEW] button 224 is selected, a preview page with the banner that is created based on the received banner-contents setting data and the received banner-position setting data appears on the screen for confirmation.

The file management unit 104 is a storage unit that stores therein at least one of the banner-contents setting data and the banner-position setting data that is received by the system control unit 109. The file management unit 104 can be, for example, a nonvolatile hard disk drive (HDD) (not shown). The banner-contents setting data and the banner-position setting data is used for all image data that is to be output by the output unit 107.

The setting management unit 106 acquires at least one of the banner-contents setting data and the banner-position setting data from the file management unit 104. In the first embodiment, the setting management unit 106 reads at least one of the banner-contents setting data and the banner-position setting data from the file management unit 104. The setting management unit 106 then extracts the banner-contents data from the identification data that is stored in the identification-data storage unit 103 by referring to the acquired banner-contents setting data. If the banner-contents setting data indicates, for example, that the user name is to be included in the banner, the setting management unit 106 extracts the user name from the identification data that is stored in the identification-data storage unit 103.

If the banner-contents setting data indicates that the date/time of printing is to be included in the banner but the identification data that is stored in the identification-data storage unit 103 does not include the date/time of printing, the setting management unit 106 acquires date/time data from the RTC 110.

The output control unit 108 performs, under control of the system control unit 109, data processing and data control so that the output unit 107 outputs the print data including the banner that is created as an image based on at least one of the banner-contents setting data and the banner-position setting data that is acquired by the setting management unit 106 and the main image that is created from the image data received by the external I/F 101.

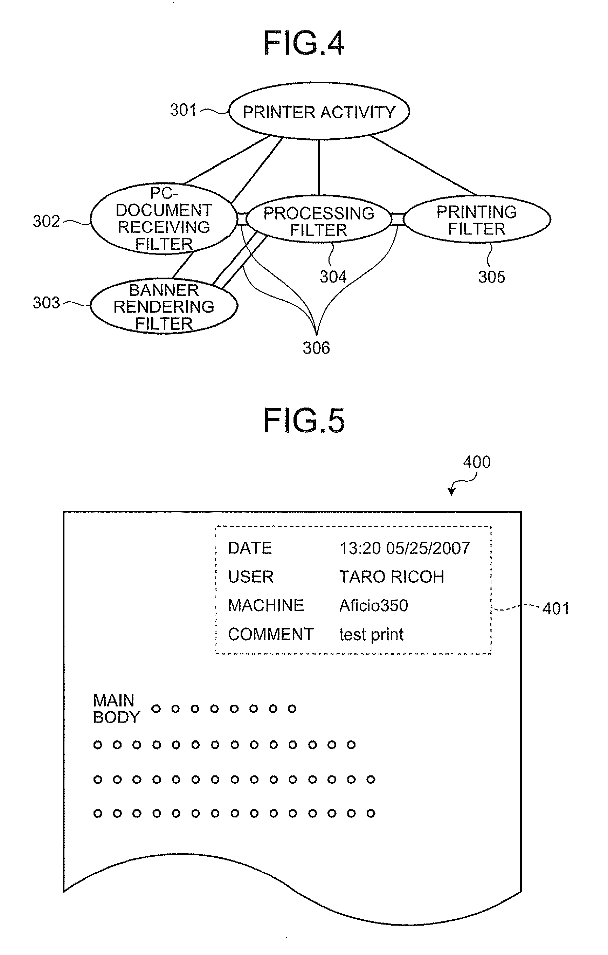

Salient operations of the system control unit 109 and the output control unit 108 are described with reference to Fig. 4. Fig. 4 is a component diagram of the output control unit 108 and the system control unit 109.

The system control unit 109 includes a printer activity 301 as an activity component that manages a job to be executed by later-described filter components. The printer activity 301 controls operations of the filter components by sending/receiving messages to/from the filter components.

The output control unit 108 includes a PC-document receiving filter 302, a banner rendering filter 303, a processing filter 304, and a printing filter 305 as the filter components. Each of those filter components executes the job, processes the received image data, and sends the processed image data to a corresponding one of pipes 306, in response to a message received from the printer activity 301. The pipes 306 are used to transfer data between the filter components. In the first embodiment, data is transferred from left to right between the filter components of Fig. 4.

The PC-document receiving filter 302 acquires the image data that is received by the external I/F 101, and analyzes the acquired image data. After that, the PC-document receiving filter 302 creates the main image from the acquired image data, and writes the created main image to the memory 105. Although the image data is received by the external I/F 101 in the first embodiment, it is allowable to receive the image data in some other manner. For example, if the MFP 100 has a scanner, it is possible to acquire the image data by scanning a document with the scanner.

The banner rendering filter 303 creates the banner from the banner-contents data that is acquired by the setting management unit 106, and writes the created banner to the memory 105.

The processing filter 304 receives the created main image from the PC-document receiving filter 302 and the created banner from the banner rendering filter 303. The processing filter 304 then creates the print data by combining the received main image with the received banner based on the banner-position setting data that is received by the setting management unit 106. The processing filter 304 creates an image based on the print data and writes the created image to the memory 105. The processing filter 304 uses the banner-position setting data that has been stored by the setting management unit 106 in the file management unit 104.

Fig. 5 is a schematic diagram of the output image that is created by combining the main image with the banner based on the banner-position setting data according to the first embodiment. For example, if the [TOP] button 213 on the setting screen shown in Fig. 3 is selected, i.e., if the system control unit 109 receives the banner-position setting data indicating that the banner is to be printed within the margin on the top side, the processing filter 304 creates the print data representing an image including a banner 401 that is arranged on the upper right of the main image that is created from image data 400. Thus, the print data representing the output image including the banner arranged on the user-customized position is created.

The processing filter 304 can be configured to either rotate or downsize or both rotate and downsize the banner before combining the banner with the main image that is created from the image data acquired by the PC-document receiving filter 302.

The printing filter 305 controls a process of printing the image that is created from the print data. The print data has been stored by the processing filter 304 in the memory 105. More particularly, the printing filter 305 prints the output image on the recording medium in the first embodiment. However, it is possible to use some other output process, such as sending the image to any of the PCs 12 and 13, sending the print data to a facsimile device, storing the print data in the main storage unit, instead of printing the print data.

The output unit 107 prints, under control of the output control unit 108, the image that is stored in the memory 105 onto the printing medium.

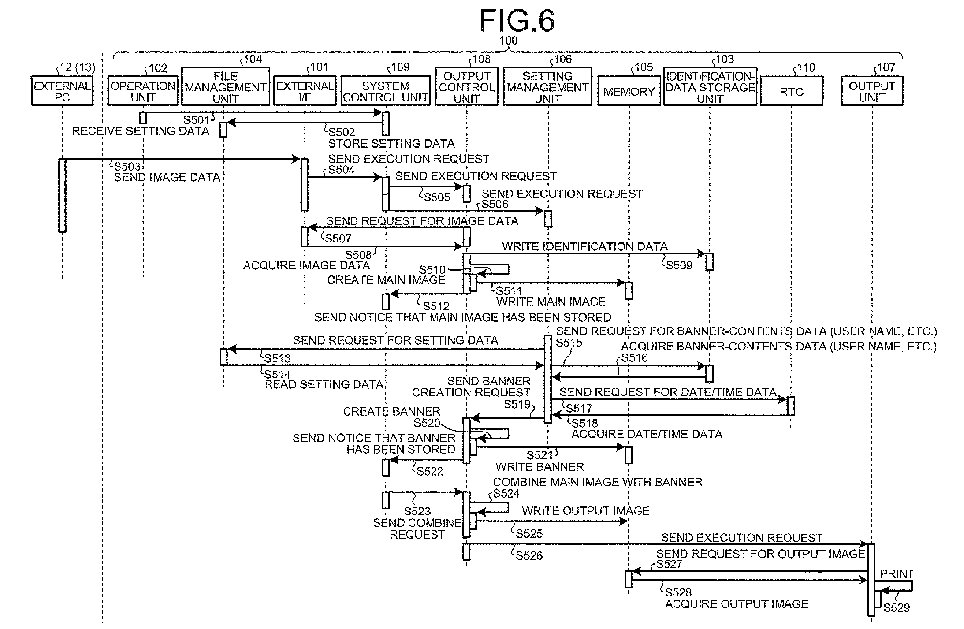

Fig. 6 is a sequence diagram of an output process in which the MFP 100 prints the print data according to the first embodiment. Assume that the PC 12 sends the target image data to the MFP 100.

The system control unit 109 receives at least one of the banner-contents setting data and the banner-position setting data via the operation unit 102 (Step S501). The system control unit 109 stores at least one of the received banner-contents setting data and the received banner-position setting data in the file management unit 104 (Step S502).

When the MFP 100 receives the image data attached with the identification data from the PC 12 (Step S503), the external I/F 101 sends to the system control unit 109 a job ID that is uniquely assigned to the process of outputting the received image data, thereby sending a request for execution of the output process (Step S504). Upon receiving the job ID, the system control unit 109 sends the received job ID to both the output control unit 108 and the setting management unit 106, thereby sending the request for execution of the output process (Step S505, Step S506).

Upon receiving the request for the execution of the output process from the system control unit 109, the output control unit 108 sends a request for the received image data to the external I/F 101 (Step S507), acquires the image data that is received by the external I/F 101 (Step S508), and writes the identification data extracted from the acquired image data to the identification-data storage unit 103 (Step S509). If the acquired image data is attached with no identification data, the output control unit 108 writes default data or data indicative that no identification data is present, for example, "unknown" or "****" as the identification data to the identification-data storage unit 103. After that, the output control unit 108 creates the main image from the acquired image data (Step S510), and writes the created main image to the memory 105 (Step S511). When the writing of the main image to the memory 105 is completed, the output control unit 108 sends a notice that the main image has been stored in the memory 105 to the system control unit 109 (Step S512).

Upon receiving the request of the execution for the output process from the system control unit 109, the setting management unit 106 sends a request for at least one of the banner-contents setting data and the banner-position setting data to the file management unit 104 (Step S513), and acquires at least one of the banner-contents setting data and the banner-position setting data (Step S514). After that, the setting management unit 106 sends a request for the banner-contents data based on the acquired banner-contents setting data to the identification-data storage unit 103 (Step S515), and acquires the banner-contents data from the identification data stored in the identification-data storage unit 103 (Step S516). If the identification data stored in the identification-data storage unit 103 does not include the date/time of printing, the setting management unit 106 sends a request for the date/time data to the RTC 110 (Step S517), and acquires the date/time data from the RTC 110 (Step S518). The setting management unit 106 then sends the acquired banner-contents data and the banner-position setting data to the output control unit 108, thereby sending a request for creating the banner to the output control unit 108 (Step S519).

The output control unit 108 creates the banner as an image from the received banner-contents data (Step S520), and writes the created banner to the memory 105 (Step S521). When the writing of the banner to the memory 105 is completed, the output control unit 108 sends a notice that the banner has been stored in the memory 105 to the system control unit 109 (Step S522).

Upon receiving the notice that the banner has been stored from the output control unit 108, the system control unit 109 sends a request for execution of a combining process to the output control unit 108 (Step S523). The output control unit 108 combines, based on the banner-position setting data that is received by the setting management unit 106, the main image that is stored in the memory 105 at Step S511 with the banner that is stored in the memory 105 at Step S521 (Step S524), thereby creating the output image. The output control unit 108 writes the created output image to the memory 105 (Step S525), and sends a request for execution of a printing process to the output unit 107 (Step S526). The output unit 107 sends a request for the output image to the memory 105 (Step S527), and acquires the output image from the memory 105 (Step S528). The output unit 107 then prints out the output image (Step S529).

In this manner, the MFP 100 acquires at least one of the banner-contents setting data and the banner-position setting data, and prints the print data including the banner that is created based on the at least one of the acquired banner-contents setting data and the acquired banner-position setting data. Thus, the MFP 100 can print the identification data in the user-customized format. This makes it possible to facilitate identifying of the user who requests printing of the copy.

An MFP 700 according to a second embodiment of the present invention reads at least one of the banner-contents setting data and the banner-position setting data from an integrated circuit (IC) card, and outputs the print data including the banner that is created as an image based on at least one of the acquired banner-contents setting data and the acquired banner-position setting data. Parts corresponding to those in the first embodiment are denoted with the same reference numerals, and the same description is not repeated.

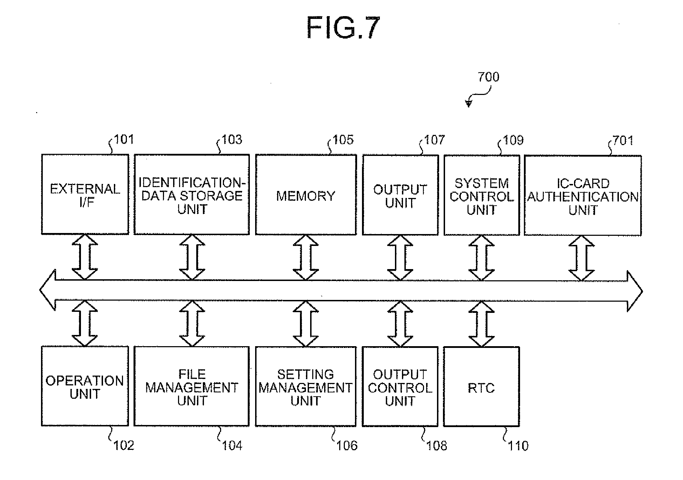

Fig. 7 is a block diagram of the MFP 700. The structure of the MFP 700 is same as that of the MFP 100 according to the first embodiment, except that the MFP 700 includes an IC-card authentication unit 701.

The IC-card authentication unit 701 reads at least one of the banner-contents setting data and the banner-position setting data from a contact (or contactless) IC card, receives at least one of the banner-contents setting data and the banner-position setting data, and stores at least one of the received banner-contents setting data and the received banner-position setting data in the file management unit 104.

In the second embodiment, the setting management unit 106 reads at least one of the banner-contents setting data and the banner-position setting data, which has been stored by the IC-card authentication unit 701 in the file management unit 104, from the file management unit 104.

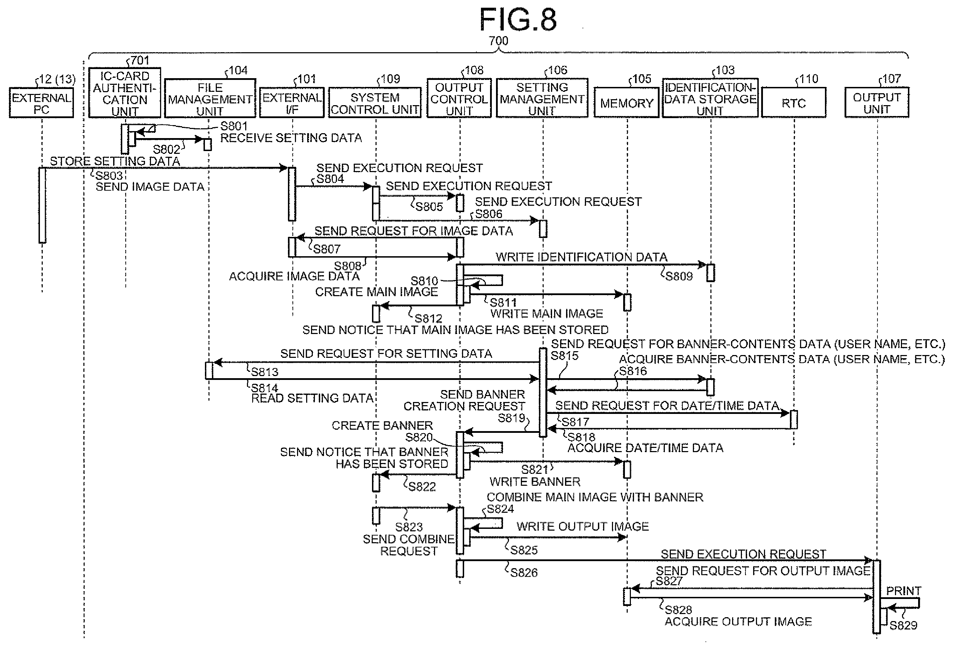

Fig. 8 is a sequence diagram of an output process in which the MFP 700 prints the print data according to the second embodiment. Step S803 to Step S829 shown in Fig. 8 are same as Step S503 to Step S529 shown in Fig. 6, and the same description is not repeated.

When a user inserts the IC card into a card slot (not shown) of the MFP 700, the IC-card authentication unit 701 reads at least one of the banner-contents setting data and the banner-position setting data from the inserted IC card, and receives at least one of the banner-contents setting data and the banner-position setting data (Step S801). The IC-card authentication unit 701 stores at least one of the received banner-contents setting data and the received banner-position setting data in the file management unit 104 (Step S802).

In this manner, the MFP 700 according to the second embodiment reads at least one of the banner-contents setting data and the banner-position setting data from the IC card, receives at least one of the banner-contents setting data and the banner-position setting data, acquires at least one of the received banner-contents setting data and the received banner-position setting data, and prints the print data including the banner that is created as an image based on at least one of the acquired banner-contents setting data and the acquired banner-position setting data. Thus, the second embodiment obtains the effects same as those in the first embodiment.

According to an aspect of the present invention, an MFP acquires at least one of banner-contents setting data and banner-position setting data, and prints print data including a banner that is created as an image based on at least one of the acquired banner-contents setting data and the acquired banner-position setting data. Thus, the MFP can print identification data in a user-customized format. This makes it possible to facilitate identifying of a user who requests the outputting of the copy.
Note 13. An image forming method including outputting output data including a main image that is created from image data and an identification image that is created from identification data included in the image data, the image forming method comprising:
acquiring at least one of first setting data and second setting data, the first setting data being information that specifies data to be included in the identification image from among the identification data, the second setting data being information that specifies a position of the identification image; and
outputting the output data including the identification image that is created based on at least one of the first setting data and the second setting data that is acquired at the acquiring.
Note 14. The image forming method according to note 13, further comprising displaying a setting screen on a display unit where a user can input at least one of the first setting data and the second setting data, wherein
acquiring includes acquiring at least one of the first setting data and the second setting data input in the setting screen.
Note 15. The image forming method according to note 13, further comprising reading at least one of the first setting data and the second setting data from an integrated-circuit card, wherein
acquiring includes acquiring at least one of the first setting data and the second setting data read at the reading.
Note 16. The image forming method according to any one of notes 13 to 15, further comprising storing the output data in a storage unit.
Note 17. The image forming method according to any one of notes 13 to 16, further comprising sending the output data to an external device.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. An image forming apparatus that outputs output data including a main image that is created from image data and an identification image that is created from identification data included in the image data, the image forming apparatus comprising:
a setting management unit (106) that acquires at least one of first setting data and second setting data, the first setting data being information that specifies data to be included in the identification image from among the identification data, the second setting data being information that specifies a position of the identification image; and
an output control unit (108) that outputs the output data including the identification image that is created based on at least one of the first setting data and the second setting data that is acquired by the setting management unit.

2. The image forming apparatus according to claim 1, further comprising a system control unit (109) that displays a setting screen on a display unit where a user can input at least one of the first setting data and the second setting data, wherein
the setting management unit acquires at least one of the first setting data and the second setting data from the system control unit.

3. The image forming apparatus according to claim 1, further comprising an integrated-circuit-card authentication unit (701) that reads at least one of the first setting data and the second setting data from an integrated-circuit card, and receives at least one of read first setting data and read second setting data, wherein
the setting management unit acquires at least one of the first setting data and the second setting data from the integrated-circuit-card authentication unit.

4. The image forming apparatus according to any one of claims 1 to 3, wherein the output control unit stores the output data in a storage unit (105).

5. The image forming apparatus according to any one of claims 1 to 3, wherein the output control unit sends the output data to an external device.

6. The image forming apparatus according to any one of claims 1 to 5, further comprising a combining unit that combines a plurality of pieces of the image data each of which is to be arranged on one page into a single piece of combined image data, so that the piece of the combined image data is arranged on one page, wherein
the setting management unit acquires the position of the identification image with respect to a combined image that is created from the combined image data as the second setting data, and
the setting management unit outputs the output data including the identification image that is arranged on the combined image.

7. The image forming apparatus according to any one of claims 1 to 6, wherein the output control unit outputs the output data including the identification image that is arranged on all pages.

8. The image forming apparatus according to any one of claims 1 to 7, wherein the output control unit either rotates or downsizes or both rotates and downsizes the identification image.

9. The image forming apparatus according to any one of claims 1 to 6, wherein
the setting management unit acquires data for specifying a page on which the identification image is to be arranged as the second setting data, and
the output control unit outputs the output data including the identification image that is arranged on specified page.

10. The image forming apparatus according to any one of claims 1 to 9, wherein
the setting management unit acquires data for specifying a surface of a printing medium on which the identification image is to be arranged as the second setting data, and
the output control unit outputs the output data including the identification image that is arranged on specified surface.

11. The image forming apparatus according to any one of claims 1 to 6, wherein
the setting management unit acquires data indicating that the identification image is to be arranged on a separate page that is different from a page on which the main image is to be arranged as the second setting data, and
the output control unit outputs the output data including the identification image that is arranged on the separate page.

12. The image forming apparatus according to any one of claims 1 to 10, wherein
the setting management unit acquires data for specifying a position of a margin with respect to the main image as the second setting data, and
the output control unit outputs the output data including the identification image that is arranged within the margin.
